# EUROPEAN PATENT APPLICATION

(11) **EP 4 560 168 A1**
(43) Date of publication of application: **28.05.2025**
(21) Application number: 24215890.5
(22) Date of filing: 27.11.2024
(51) Int. Cl.: F16K 11/085

(54) **FOUR-WAY VALVE, TEMPERATURE CONTROL SYSTEM, AND ENERGY STORAGE SYSTEM**

(30) Priority: 27.11.2023 CN 202311604676
(71) Applicant: Huawei Digital Power Technologies Co., Ltd., Shenzhen, Guangdong 518043 (CN)
(72) Inventor: HUANG, Tao, Shenzhen, 518043 (CN); LI, Malin, Shenzhen, 518043 (CN); WU, Yingwen, Shenzhen, 518043 (CN)
(74) Representative: Gill Jennings & Every LLP

(57) **Abstract**

Embodiments of this application provide a four-way valve, a temperature control system, and an energy storage system. The four-way valve includes a valve body and a valve plug. The valve body includes a mounting cavity, a first valve port, a second valve port, a third valve port, and a fourth valve port. The first valve port, the second valve port, the third valve port, and the fourth valve port all penetrate an inner side surface of the mounting cavity and an outer side surface of the valve body, and are configured to circulate fluid. The valve plug is accommodated in the mounting cavity and is rotatable relative to the valve body. A circumferential side of the valve plug includes a plurality of partition cavities. A working mode of the four-way valve includes a first mode, a second mode, and a third mode. The four-way valve switches between the first mode, the second mode, and the third mode through rotation of the valve plug relative to the valve body. The four-way valve helps reduce a quantity of three-way valves used in the temperature control system, increase a flow path mode of the temperature control system, and improve control convenience of the temperature control system.

## Description

### TECHNICAL FIELD

This application relates to the field of divergence system technologies, and in particular, to a four-way valve, a temperature control system, and an energy storage system.

### BACKGROUND

With rapid development of industries such as new energy vehicles and energy storage stations, importance and complexity of thermal management systems, especially complexity of liquid pipes, grow increasingly. For example, a functional module that is in an energy storage system and that may use a liquid pipe includes battery cooling, battery heat-pump heating, battery thermistor heating, load (power conversion system, PCS) cooling, and energy storage cabinet dehumidification. For the field of vehicles, motor cooling, passenger cabin cooling and heating, and the like are also included. A large quantity of electromagnetic three-way valve combinations need to be disposed in a liquid pipe of the thermal management system, to control temperatures at different positions of an entire device by using one thermal management system. Use of the plurality of three-way valves causes problems of complex control, complex mounting, and high costs, and more space is occupied.

### SUMMARY

Embodiments of this application provide a four-way valve, a temperature control system, and an energy storage system, to reduce a volume of a multi-way valve. The multi-way valve has a simple structure, which further helps reduce a risk of leakage of the temperature control system.

According to a first aspect, embodiments of this application provide a four-way valve, used in a temperature control system. The four-way valve includes a valve body and a valve plug. The valve body includes a mounting cavity, a first valve port, a second valve port, a third valve port, and a fourth valve port. The first valve port, the second valve port, the third valve port, and the fourth valve port all penetrate an inner side surface of the mounting cavity and an outer side surface of the valve body, and are configured to circulate fluid. The valve plug is accommodated in the mounting cavity and is rotatable relative to the valve body, and a circumferential side of the valve plug includes at least two partition cavities. A working mode of the four-way valve includes a first mode, a second mode, and a third mode. The four-way valve switches between the first mode, the second mode, and the third mode through rotation of the valve plug relative to the valve body. When the four-way valve is in the first mode, the first valve port communicates with the second valve port through at least one of the partition cavities, and the third valve port communicates with the fourth valve port through at least one of the partition cavities. When the four-way valve is in the second mode, the first valve port communicates with the fourth valve port through at least one of the partition cavities, and the second valve port communicates with the third valve port through at least one of the partition cavities. When the four-way valve is in the third mode, the first valve port communicates with the third valve port through at least one of the partition cavities, and the second valve port communicates with the fourth valve port through at least one of the partition cavities.

The four-way valve provided in this application is a hub that is of the temperature control system and that is for switching a flow path mode, and different flow path modes are implemented by switching a working position of the four-way valve. Use of the four-way valve including the three working modes in the temperature control system helps reduce a quantity of three-way valves used in the temperature control system, increase a flow path mode of the temperature control system, and improve control convenience of the temperature control system.

According to the first aspect, in a possible implementation, the third valve port includes a No. 1 third valve port and a No. 2 third valve port, and the fourth valve port includes a No. 1 fourth valve port and a No. 2 fourth valve port. The No. 1 third valve port communicates with the No. 2 third valve port, and the No. 1 fourth valve port communicates with the No. 2 fourth valve port. The first valve port, the second valve port, the No. 1 third valve port, the No. 2 third valve port, the No. 1 fourth valve port, and the No. 2 fourth valve port each include an inner port disposed toward the mounting cavity. When the four-way valve is in the first mode, the inner port of the No. 2 third valve port and the inner port of the No. 2 fourth valve port are closed by the valve plug, the inner port of the first valve port communicates with the inner port of the No. 1 fourth valve port through the at least one of the partition cavities, and the inner port of the second valve port communicates with the inner port of the No. 1 third valve port through the at least one of the partition cavities. When the four-way valve is in the second mode, the inner port of the No. 2 third valve port and the inner port of the No. 2 fourth valve port are closed by the valve plug, the inner port of the first valve port communicates with the inner port of the second valve port through the at least one of the partition cavities, and the inner port of the No. 1 fourth valve port communicates with the inner port of the No. 1 third valve port through the at least one of the partition cavities. When the four-way valve is in the third mode, the inner port of the No. 1 fourth valve port and the inner port of the No. 1 third valve port are closed by the valve plug, the inner port of the first valve port communicates with the inner port of the No. 2 third valve port through the at least one of the partition cavities, and the inner port of the No. 2 fourth valve port communicates with the inner port of the second valve port through the at least one of the partition cavities.

In this possible implementation, the No. 2 third valve port that communicates with the No. 1 third valve port and the No. 2 fourth valve port that communicates with the No. 1 fourth valve port are added on the valve body. The valve plug moves relative to the valve body. This can implement switching of the four-way valve between the three working modes, increase the flow path mode of the temperature control system, and improve control flexibility of the temperature control system. In addition, only the valve ports need to be added to the valve body. In this way, a complex flow channel structure does not need to be disposed on the valve plug, thereby reducing production difficulty and manufacturing costs of the valve plug.

According to the first aspect, in a possible implementation, the first valve port, the second valve port, the No. 1 third valve port, the No. 2 third valve port, the No. 1 fourth valve port, and the No. 2 fourth valve port are arranged in an array. The No. 2 third valve port, the first valve port, and the No. 1 fourth valve port are sequentially arranged in a first row. The No. 2 fourth valve port, the second valve port, and the No. 2 third valve port are sequentially arranged in a second row.

In this possible implementation, the first valve port, the second valve port, the No. 1 third valve port, the No. 2 third valve port, the No. 1 fourth valve port, and the No. 2 fourth valve port are arranged in the array. This helps improve regularity of connections between the plurality of valve ports and corresponding fluid pipes.

According to the first aspect, in a possible implementation, an inner wall of the mounting cavity includes an inner circumferential wall and an inner bottom wall that are connected. The inner bottom wall is perpendicular to an axial direction of the valve plug. The first valve port, the second valve port, the third valve port, and the fourth valve port each include an outer port and an inner port. The inner port of the first valve port, the inner port of the second valve port, and the inner port of the third valve port are all disposed on the inner circumferential wall. The inner port of the fourth valve port is disposed on the inner bottom wall. The outer ports are all arranged on an outer wall of the valve body. The plurality of partition cavities include a first partition cavity and a second partition cavity. The first partition cavity and the second partition cavity are arranged in a circumferential direction of the valve plug. The second partition cavity penetrates the valve plug and faces a bottom wall of the inner bottom wall. The second partition cavity communicates with the fourth valve port. A part of the second partition cavity and the fourth valve port are arranged along a rotation axis of the valve plug. When the four-way valve is in the first mode, the first valve port, the second valve port, and the first partition cavity communicate with one another, and the fourth valve port, the third valve port, and the second partition cavity communicate with one another. When the four-way valve is in the second mode, the first valve port, the fourth valve port, and the second partition cavity communicate with one another, and the second valve port, the third valve port, and the first partition cavity communicate with one another. When the four-way valve is in the third mode, the third valve port, the first valve port, and the first partition cavity communicate with one another, and the second valve port, the fourth valve port, and the second partition cavity communicate with one another.

In this possible implementation, the first valve port, the second valve port, the third valve port, and the fourth valve port each include an outer port and an inner port. The inner port of the fourth valve port is disposed on the inner bottom wall. The second partition cavity communicates with the fourth valve port. The part of the second partition cavity and the fourth valve port are arranged along the rotation axis of the valve plug. In this way, the four-way valve includes the three working modes. The flow channel on the valve plug is simple to dispose and easy to manufacture.

According to the first aspect, in a possible implementation, the outer wall of the valve body includes an outer bottom wall and an outer circumferential wall that are connected. The outer bottom wall and the inner bottom wall are disposed back to back, and the outer port is disposed on the outer bottom wall.

In this possible implementation, the outer port is disposed on the bottom wall. This facilitates a connection between a fluid pipe and each valve port, thereby improving regularity of the pipe connection.

According to the first aspect, in a possible implementation, an inner wall of the second partition cavity includes an arc-shaped inner wall, and a circle in which the arc-shaped inner wall is located is coaxially disposed with the fourth valve port, to lower a risk of leakage.

According to the first aspect, in a possible implementation, the plurality of partition cavities include a first partition cavity, a second partition cavity, a third partition cavity, and a fourth partition cavity. The first partition cavity and the second partition cavity are arranged in an axial direction of the valve plug. The first partition cavity, the third partition cavity, and the fourth partition cavity are arranged in a circumferential direction of the valve plug. When the four-way valve is in the first mode, the inner port of the first valve port, the No. 1 fourth valve port, and the first partition cavity communicate with one another, and the second valve port, the No. 2 third valve port, and the second partition cavity communicate with one another. When the four-way valve is in the second mode, the first valve port, the second valve port, and the third partition cavity communicate with one another, and the No. 1 fourth valve port, the No. 1 third valve port, and the fourth partition cavity communicate with one another. When the four-way valve is in the third mode, the No. 2 third valve port, the first valve port, and the first partition cavity communicate with one another, and the No. 2 fourth valve port, the second valve port, and the second partition cavity communicate with one another.

In this possible implementation, the plurality of partition cavities are arranged in a regular manner. This simplifies a structure of the four-way valve, thereby reducing a volume of the four-way valve. The four-way valve has the simple structure, which further helps reduce a risk of leakage of the temperature control system.

According to the first aspect, in a possible implementation, the No. 1 third valve port, the No. 2 third valve port, the No. 1 fourth valve port, and the No. 2 fourth valve port each include an outer port disposed away from the mounting cavity. The outer port of the No. 1 third valve port and the outer port of the No. 2 third valve port are configured to connect to and communicate with a same fluid pipe. The outer port of the No. 1 fourth valve port and the outer port of the No. 2 fourth valve port are configured to connect to and communicate with a same fluid pipe.

In this possible implementation, the outer ports of the No. 1 third valve port and the No. 2 third valve port are connected and communicate with each other. When the inner port of one of the No. 1 third valve port and the No. 2 third valve port is blocked by the valve plug, the inner port of the other of the No. 1 third valve port and the No. 2 third valve port can still communicate with the corresponding partition cavity. The outer ports of the No. 1 fourth valve port and the No. 2 fourth valve port are connected and communicate with each other. When the inner port of one of the No. 1 fourth valve port and the No. 2 fourth valve port is blocked by the valve plug, the inner port of the other of the No. 1 fourth valve port and the No. 2 fourth valve port can still communicate with the corresponding partition cavity, so that the third valve port that is not blocked communicates with the fourth valve port. The outer ports of the No. 1 third valve port and the No. 2 third valve port communicate with each other through a fluid pipe, and the structure is simple and convenient. The outer ports of the No. 1 fourth valve port and the No. 2 fourth valve port communicate with each other through a fluid pipe, and the structure is simple and convenient.

According to the first aspect, in a possible implementation, the plurality of partition cavities include a first partition cavity, a second partition cavity, a third partition cavity, a fourth partition cavity, a fifth partition cavity, and a sixth partition cavity. The first partition cavity and the second partition cavity are arranged in an axial direction of the valve plug. The first partition cavity, the third partition cavity, the fourth partition cavity, a part of the fifth partition cavity, and a part of the sixth partition cavity are arranged in a circumferential direction of the valve plug. When the four-way valve is in the first mode, the first valve port, the second valve port, and the third partition cavity communicate with one another, and the fourth valve port, the third valve port, and the fourth partition cavity communicate with one another. When the four-way valve is in the second mode, the first valve port, the fourth valve port, and the first partition cavity communicate with one another, and the first second valve port, the third valve port, and the second partition cavity communicate with one another. When the four-way valve is in the third mode, the third valve port, the first valve port, and the fifth partition cavity communicate with one another, and the second valve port, the fourth valve port, and the sixth partition cavity communicate with one another.

In this possible implementation, the fifth partition cavity and the sixth partition cavity are added to the circumferential wall of the valve plug. In this way, at a specified position of the valve plug relative to the valve body, when the four-way valve is in the third mode, the third valve port, the first valve port, and the fifth partition cavity communicate with one another, and the second valve port, the fourth valve port, and the sixth partition cavity communicate with one another.

According to the first aspect, in a possible implementation, the first valve port and the fourth valve port are arranged in a first row, the second valve port and the third valve port are arranged in a second row, the first valve port and the second valve port are arranged in a first column, and the third valve port and the fourth valve port are arranged in a second column.

In this possible implementation, the plurality of valve ports are arranged in a regular manner. This simplifies a structure of the four-way valve, thereby reducing a volume of the four-way valve. The four-way valve has the simple structure, which further helps reduce a risk of leakage of the temperature control system.

According to the first aspect, in a possible implementation, the fifth partition cavity includes a first part and a second part that communicate with each other, and the first part and the second part are connected in the circumferential direction of the valve plug. The first part is configured to communicate with the first valve port, and the second part is configured to communicate with the third valve port. The sixth partition cavity includes a third part, a fourth part, and a fifth part. The third part and the first part are arranged in the axial direction of the valve plug. The third part is configured to communicate with the second valve port. The fourth part is located between the third part and the fifth part. The first part and the fifth part are arranged in the circumferential direction of the valve plug. The fifth part is configured to communicate with the fourth valve port.

In this possible implementation, flow channels of the fifth partition cavity and the sixth partition cavity are disposed, to increase a working mode of the four-way valve and avoid cross disposal of the partition cavities in the valve plug.

According to the first aspect, in a possible implementation, the outer side surface that is of the valve body and that is away from the mounting cavity includes a plane, and the first valve port, the second valve port, the third valve port, and the fourth valve port all penetrate the plane.

In this possible implementation, the first valve port, the second valve port, the third valve port, and the fourth valve port all penetrate the plane. This facilitates a connection between a fluid pipe and each valve port, thereby improving regularity of the pipe connection.

According to a second aspect, this application further provides a temperature control system. The temperature control system includes a heat exchanger, a plurality of fluid pipes, and the four-way valve according to the first aspect. Each of the first valve port, the second valve port, the third valve port, and the fourth valve port of the four-way valve is connected to one of the fluid pipes, and at least one of the plurality of fluid pipes is provided with the heat exchanger.

According to a third aspect, this application further provides a vehicle. The vehicle includes a battery pack and the temperature control system according to the second aspect, and the temperature control system is configured to control a temperature of the battery pack.

According to a fourth aspect, this application further provides an energy storage system. The energy storage system includes a battery pack and the temperature control system according to the second aspect, and the temperature control system is configured to control a temperature of the battery pack.

### BRIEF DESCRIPTION OF DRAWINGS

FIG. 1 is a diagram of a topology of a functional system according to an embodiment of this application;
FIG. 2 is a diagram of a structure of a valve body of a four-way valve according to a first embodiment of this application;
FIG. 3 is a diagram of a structure of a valve plug of a four-way valve according to a first embodiment of this application;
FIG. 4 is a diagram of an arrangement of a plurality of valve ports on a valve body according to a first embodiment of this application;
FIG. 5 is a diagram of a topology of a valve plug according to a first embodiment of this application;
FIG. 6 is a diagram of a topology of a four-way valve in a first mode according to a first embodiment of this application;
FIG. 7 is a diagram of a topology of a four-way valve in a second mode according to a first embodiment of this application;
FIG. 8 is a diagram of a topology of a four-way valve in a third mode according to a first embodiment of this application;
FIG. 9 is a three-dimensional sectional view of a part of a structure of a four-way valve according to a second embodiment of this application;
FIG. 10 is a cross-sectional diagram of a four-way valve in a first mode according to a second embodiment of this application;
FIG. 11 is a cross-sectional diagram of a four-way valve in a second mode according to a second embodiment of this application;
FIG. 12 is a cross-sectional diagram of a four-way valve in a third mode according to a second embodiment of this application;
FIG. 13 is a diagram of an arrangement of four valve ports on a valve body according to a third embodiment of this application;
FIG. 14 is a diagram of cooperation between a valve body and a valve plug of a four-way valve in a third mode according to a third embodiment of this application;
FIG. 15 is a diagram of a topology of a four-way valve in a first mode according to a third embodiment of this application;
FIG. 16 is a diagram of a topology of a four-way valve in a second mode according to a third embodiment of this application; and
FIG. 17 is a diagram of a topology of a four-way valve in a third mode according to a third embodiment of this application.

### DESCRIPTION OF EMBODIMENTS

To facilitate understanding of a temperature control system, a vehicle, an energy storage system, and a multi-way valve provided in embodiments of this application, the following describes application scenarios of the temperature control system, the vehicle, the energy storage system, and the multi-way valve. The temperature control system may be specifically a liquid cooling system, a heating system, a hydraulic system, or the like. In a word, the temperature control system includes a plurality of liquid pipes. Liquid diverges and converges between the plurality of liquid pipes, and a liquid flow needs to be adjusted. For example, the temperature control system in embodiments of this application may be used as a temperature control system of a vehicle or a temperature control system of an energy storage system. Specifically, the temperature control system of the vehicle may be configured to control a temperature of the temperature control system of the vehicle, and the temperature control system of the energy storage system may be configured to control a temperature of the temperature control system of the energy storage system. In the conventional technology, this may be implemented by disposing a valve group formed by a plurality of three-way valves. However, this solution results in a complex control process, a large quantity of connection components, and a high risk of leakage. In addition, this also results in a large volume of the valve group of the temperature control system, and more space is occupied.

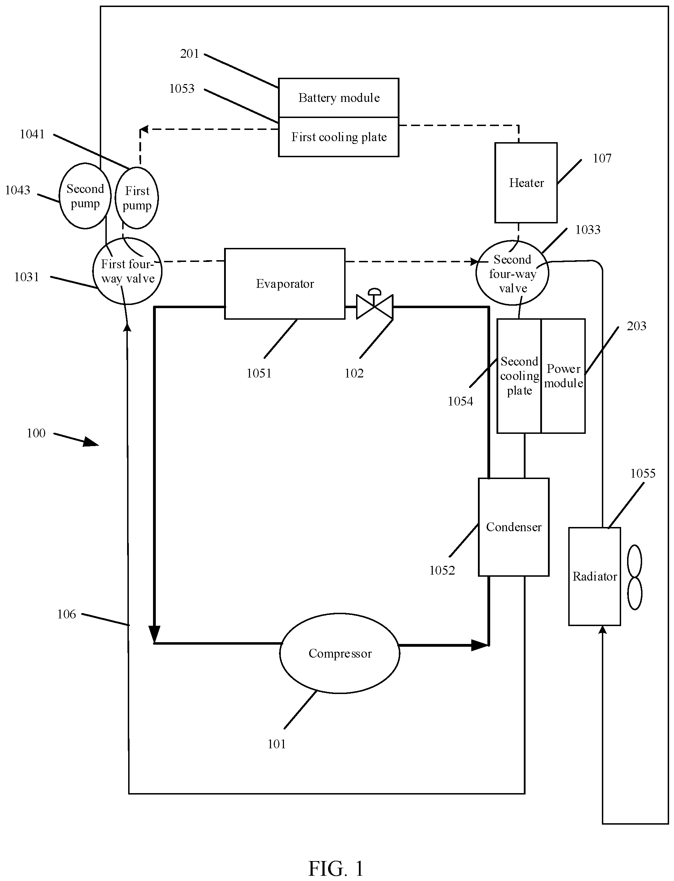

FIG. 1 is a diagram of a topology of a functional system according to an embodiment of this application. The functional system includes a temperature control system 100 and a battery pack. The temperature control system 100 is configured to adjust a temperature of the battery pack. The battery pack includes a battery module 201 and a power module 203. The functional system may be an energy storage system or a vehicle. The vehicle may be a new energy vehicle or a common vehicle. The battery module 201 is configured to provide electric energy. The power module 203 includes an inverter configured to convert a direct current into an alternating current.

The temperature control system 100 includes a compressor 101, a throttle valve 102, a four-way valve, a pump, a heat exchanger, a fluid pipe 106, and a heater 107. There are a plurality of heat exchangers. The plurality of heat exchangers include an evaporator 1051, a condenser 1052, a first cooling plate 1053, and a second cooling plate 1054. The pump includes a first pump 1041 and a second pump 1043. The four-way valve includes a first four-way valve 1031 and a second four-way valve 1033. A flow path of the temperature control system 100 includes a refrigerant flow path and a coolant flow path. A refrigerant may be Freon. A coolant may be water or other liquid. The coolant flow path includes a first coolant flow path and a second coolant flow path. The compressor 101, the evaporator 1051, the throttle valve 102, and the condenser 1052 are connected through the fluid pipe 106 to form the refrigerant flow path in which the refrigerant may be recycled. The evaporator 1051, the first four-way valve 1031, the first pump 1041, the first cooling plate 1053, the heater 107, and the second four-way valve 1033 are connected through the fluid pipe 106 to form the first coolant flow path in which the coolant may be circulated. The second four-way valve 1033, the evaporator 1051, the first four-way valve 1031, the second pump 1043, the first cooling plate 1053, the heater 107, and the second four-way valve 1033 are connected through the fluid pipe 106 to form the second coolant flow path in which the coolant may be circulated.

The compressor 101 is configured to pressurize the refrigerant, to drive the refrigerant to circulate in the refrigerant flow path. The throttle valve 102 is configured to control a flow volume of the refrigerant in the refrigerant flow path. The evaporator 1051 and the condenser 1052 are heat exchangers for the refrigerant and the coolant. A radiator is an air/liquid heat exchanger, and is configured to exchange heat between the coolant and an environment. The first pump 1041 is configured to provide power for circulation of the coolant in the first coolant flow path. The second pump 1043 is configured to provide power for circulation of the coolant in the second coolant flow path. The first cooling plate 1053 is configured to exchange heat with the battery module 201. The second cooling plate 1054 is configured to exchange heat with the power module 203.

The four-way valve is a hub for switching a coolant flow path mode. Different coolant flow path modes are implemented by switching a working position of the four-way valve. Use of the four-way valve including three working modes in the temperature control system helps reduce a quantity of three-way valves, increase the flow path mode of the temperature control system, and improve control convenience of the temperature control system.

It may be understood that structures of the functional system and the temperature control system 100 in FIG. 1 are merely examples. A quantity of heat exchangers and disposing positions of the heat exchangers are not limited in this application, and a quantity of four-way valves and disposing positions of the four-way valves are not limited in this application. The temperature control system 100 includes the four-way valve, the heat exchanger, and the fluid pipe 106. The four-way valve is connected to the heat exchanger through a fluid pipe body. The temperature control system 100 is not limited to being configured to adjust the temperature of the battery pack, and may also be configured to control a temperature of another component.

A conventional four-way valve is provided with four valve ports. The valve ports of the four-way valve are configured to communicate with an external pipe. Two different working modes of the four-way valve are implemented by changing different rotation positions of the valve plug driven by an actuator to rotate relative to the valve body. In this way, one actuator controls one four-way valve to implement two different thermal management modes. However, as a quantity of thermal management modes required by the temperature control system is increasing, the four-way valve having the two working modes has difficulty in meeting a requirement.

On the basis of this, this application provides a four-way valve and a temperature control system. The four-way valve includes a valve body and a valve plug. The valve body includes a mounting cavity, a first valve port, a second valve port, a third valve port, and a fourth valve port. The first valve port, the second valve port, the third valve port, and the fourth valve port all penetrate an inner side surface of the mounting cavity and an outer side surface of the valve body, and are configured to circulate fluid. The valve plug is accommodated in the mounting cavity and is rotatable relative to the valve body. A circumferential side of the valve plug includes a plurality of partition cavities. A working mode of the four-way valve includes a first mode, a second mode, and a third mode. The four-way valve switches between the first mode, the second mode, and the third mode through rotation of the valve plug relative to the valve body. When the four-way valve is in the first mode, the first valve port communicates with the second valve port through at least one of the partition cavities, and the third valve port communicates with the fourth valve port through at least one of the partition cavities. When the four-way valve is in the second mode, the first valve port communicates with the fourth valve port through at least one of the partition cavities, and the second valve port communicates with the third valve port through at least one of the partition cavities. When the four-way valve is in the third mode, the first valve port communicates with the third valve port through at least one of the partition cavities, and the second valve port communicates with the fourth valve port through at least one of the partition cavities.

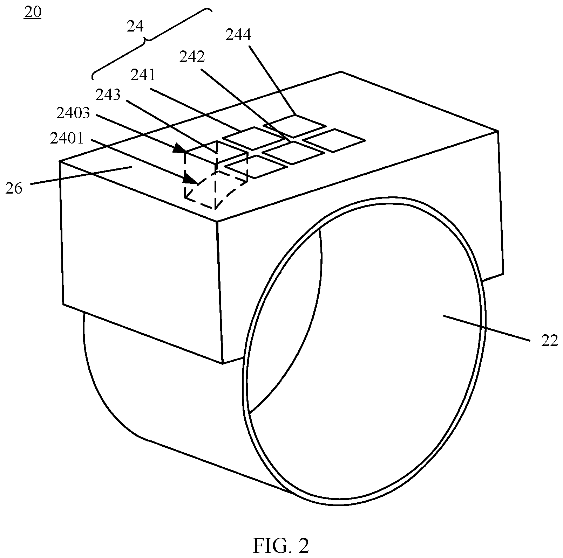

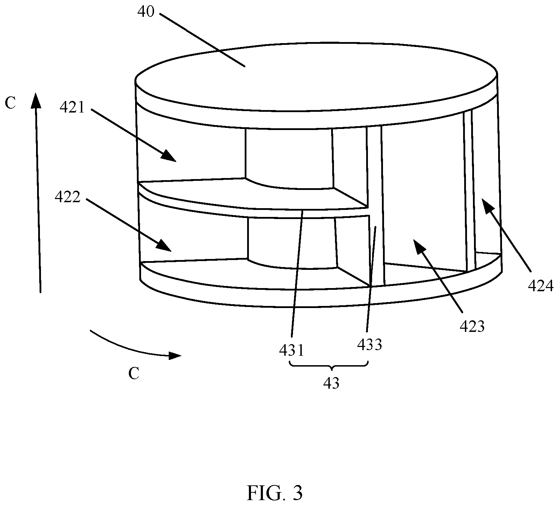

FIG. 2 is a diagram of a structure of a valve body of a four-way valve according to a first embodiment of this application. FIG. 3 is a diagram of a structure of a valve plug of a four-way valve according to a first embodiment of this application. The valve body 20 shown in FIG. 2 and the valve plug 40 shown in FIG. 3 are assembled to form a main body part of the multi-way valve in embodiments of this application. The four-way valve includes the valve body 20 (as shown in FIG. 2) and the valve plug 40 (as shown in FIG. 3). The valve plug 40 may be accommodated in the valve body 20 in a rotating manner. A circumferential side of the valve plug 40 includes a plurality of partition cavities. The four-way valve further includes an actuator. The actuator is configured to drive the valve plug 40 to move relative to the valve body 20.

With reference to FIG. 2, the valve body 20 provided in the first embodiment of this application includes a mounting cavity 22 and a plurality of valve ports 24 that communicate with the mounting cavity 22. The mounting cavity 22 is configured to accommodate the valve plug 40. The mounting cavity 22 may be a cylindrical mounting cavity 22. In other words, an inner side surface of the mounting cavity 22 is an inner cylindrical surface. The valve plug 40 may be a cylindrical valve plug 40, and the valve plug 40 and the mounting cavity 22 are coaxially mounted. The valve plug 40 is mounted in the mounting cavity 22 of the valve body 20, and is rotatable circumferentially in the mounting cavity 22.

Each valve port 24 includes an inner port 2401 and an outer port 2403. The inner port 2401 penetrates the inner side surface of the mounting cavity 22. The outer port 2403 penetrates an outer side surface of the valve body 20, and is configured to connect to a fluid pipe 106. The valve plug 40 may rotate relative to the valve body 20. Therefore, each inner port 2401 may be opened or closed (blocked) by the valve plug 40. In embodiments of this application, a relative position relationship between the valve plug 40 and the valve body 20 is adjusted. In this way, the partition cavities may communicate with inner ports 2401 of different valve ports 24, to change a communication relationship of the fluid pipe that communicates with the four-way valve. When the valve plug 40 rotates to a set position, at least two inner ports 2401 communicate with one partition cavity. The valve plug 40 is controlled to rotate to different positions. In this way, communication between different inner ports 2401 can be implemented, to change a communication solution of the four-way valve. Only one valve plug 40 needs to be mounted in the valve body 20 of the four-way valve. In this way, mode adjustment of a liquid path that communicates with the four-way valve can be implemented. This solution helps simplify a structure of the four-way valve and reduce a volume of the four-way valve. The four-way valve has the simple structure, which further helps reduce a risk of leakage of the temperature control system 100.

Each valve port 24 may extend along a straight line, extend in a bent manner, or extend in a curved manner. When the valve port 24 extends along a straight line, the inner port 2401 and the outer port 2403 of the valve port 24 may be disposed coaxially. A position relationship or a manner of communication between the inner port 2401 and the outer port 2403 of the valve port 24 is not limited in this application. An arrangement of the outer ports 2403 of the valve ports 24 is not limited by an arrangement of the inner ports 2401. Therefore, the arrangement of the outer ports may be set based on an actual application scenario, to simplify pipe disposition of the temperature control system 100.

The plurality of valve ports 24 include a first valve port 241, a second valve port 242, a third valve port 243, and a fourth valve port 244. The first valve port 241, the second valve port 242, the third valve port 243, and the fourth valve port 244 all penetrate the inner side surface of the mounting cavity 22 and the outer side surface of the valve body 20. Each of the first valve port 241, the second valve port 242, the third valve port 243, and the fourth valve port 244 is connected to a corresponding fluid pipe 106, and is configured to circulate fluid.

In some embodiments of this application, the outer side surface of the valve body 20 includes a plane. The outer port 2403 of the first valve port 241, the outer port 2403 of the second valve port 242, the outer port 2403 of the third valve port 243, and the outer port 2403 of the fourth valve port 244 are all located on the plane. In other words, the first valve port 241, the second valve port 242, the third valve port 243, and the fourth valve port 244 all penetrate the plane. This facilitates a connection between the fluid pipe 106 and each valve port, thereby improving regularity of the pipe connection. It may be understood that a structure of the outer side surface of the valve body 20 is not limited in this application. For example, the outer side surface may not include a plane, and may be located on a curved surface, or the outer port 2403 of the first valve port 241, the outer port 2403 of the second valve port 242, the outer port 2403 of the third valve port 243, and the outer port 2403 of the fourth valve port 244 may be located on different planes.

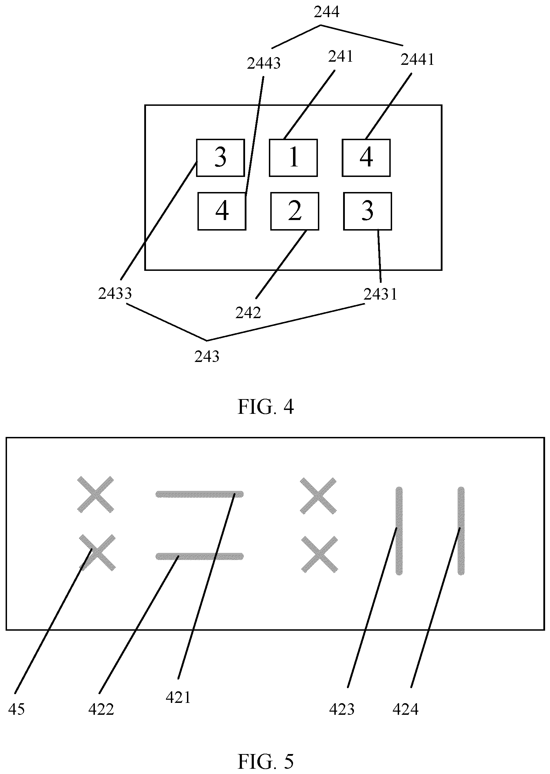

FIG. 4 is a diagram of an arrangement of the plurality of valve ports on the valve body according to the first embodiment of this application. The first valve port 241 is denoted as an Arabic numeral "1" in FIG. 4, the second valve port 242 is denoted as an Arabic numeral "2" in FIG. 4, the third valve port 243 is denoted as an Arabic numeral "3" in FIG. 4, and the fourth valve port 244 is denoted as an Arabic numeral "4" in FIG. 4. There are two third valve ports 243, and the two third valve ports 243 include a No. 1 third valve port 2431 and a No. 2 third valve port 2433. There are two fourth valve ports 244, and the two fourth valve ports 244 include a No. 1 fourth valve port 2441 and a No. 2 fourth valve port 2443. An outer port 2403 of the No. 2 third valve port 2433 and an outer port 2403 of the No. 1 third valve port 2431 are connected and communicate with each other through a pipe, to connect to a same fluid pipe 106. An outer port 2403 of the No. 1 fourth valve port 2441 and an outer port 2403 of the No. 2 fourth valve port 2443 are connected and communicate with each other through a pipe, to connect to a same fluid pipe 106.

The six valve ports 24 are arranged in an array. The No. 2 third valve port 2433, the first valve port 241, and the No. 1 fourth valve port 2441 are sequentially arranged in a first row in a first direction, and the No. 2 fourth valve port 2443, the second valve port 242, and the No. 1 third valve port 2431 are sequentially arranged in a second row in the first direction. The No. 2 third valve port 2433 and the No. 2 fourth valve port 2443 are arranged in a first column in a second direction. The first valve port 241 and the second valve port 242 are arranged in a second column in the second direction. The No. 1 fourth valve port 2441 and the No. 1 third valve port 2431 are arranged in a third column in the second direction. In this way, it is convenient to cooperate with the valve plug 40.

It may be understood that a quantity of first valve ports 241 is not limited to one, and there may alternatively be at least two first valve ports 241; a quantity of second valve ports 242 is not limited to one, and there may alternatively be at least two second valve ports 242; a quantity of third valve ports 243 is not limited to two, and there may alternatively be a plurality of third valve ports 243; and a quantity of fourth valve ports 244 is not limited to two, and there may alternatively be a plurality of fourth valve ports 244. An arrangement manner of the plurality of valve ports 24 is not limited in this application either.

With reference to FIG. 3, the plurality of partition cavities include a first partition cavity 421, a second partition cavity 422, a third partition cavity 423, and a fourth partition cavity 424. The first partition cavity 421 and the second partition cavity 422 are disposed in a stacked manner in an axial direction C of the valve plug 40. The first partition cavity 421, the third partition cavity 423, and the fourth partition cavity 424 are arranged in a circumferential direction of the valve plug 40. In some embodiments of this application, in the circumferential direction of the valve plug 40, a length of the first partition cavity 421 is equal to a length of the second partition cavity 422, a length of the first partition cavity 421 is greater than a length of the third partition cavity 423, and a length of the third partition cavity 423 is equal to a length of the fourth partition cavity 424. It may be understood that the valve plug 40 may be of a six-equal structure.

Still with reference to FIG. 3, the valve plug 40 further includes a plurality of partition plates 43 to form the plurality of partition cavities of the valve plug 40, and the plurality of partition plates 43 include a first partition plate 431 and a second partition plate 433. The first partition plate 431 is perpendicular to the axial direction C of the valve plug 40, and the second partition plate 433 is parallel to the axial direction C of the valve plug 40. The plurality of partition plates form the plurality of partition cavities. In a specific embodiment, the first partition plate 431 and the second partition plate 433 may be arranged based on a requirement, to form different partition cavity layouts.

FIG. 5 is a diagram of a topology of the valve plug according to the first embodiment of this application. The circumferential wall of the valve plug 40 further includes a solid wall 45 configured to block the inner port 2401. A symbol "×" shown in FIG. 5 is the solid wall 45 of the valve plug 40.

A working mode of the four-way valve includes a first mode, a second mode, and a third mode. The four-way valve switches between the first mode, the second mode, and the third mode through rotation of the valve plug 40 relative to the valve body 20.

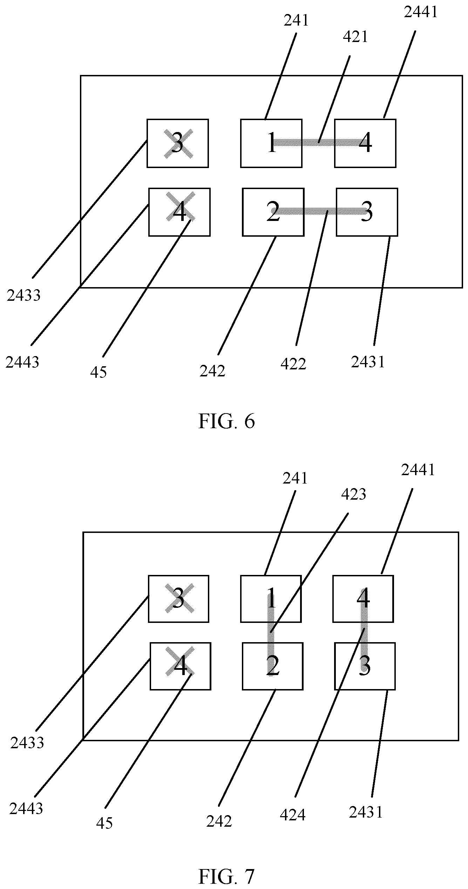

When the four-way valve is in the first mode, FIG. 6 is a diagram of a topology of the four-way valve in the first mode according to the first embodiment of this application. The inner port 2401 of the No. 2 third valve port 2433 and the inner port 2401 of the No. 2 fourth valve port 2443 are blocked and further closed by the solid wall 45 of the valve plug 40. The inner port 2401 of the first valve port 241 communicates with the inner port 2401 of the No. 1 fourth valve port 2441 through the first partition cavity 421, and the inner port 2401 of the second valve port 242 communicates with the inner port 2401 of the No. 1 third valve port 2431 through the second partition cavity 422 of the valve plug 40.

When the four-way valve is in the second mode, FIG. 7 is a diagram of a topology of the four-way valve in the second mode according to the first embodiment of this application. The inner port 2401 of the No. 2 third valve port 2433 and the inner port 2401 of the No. 2 fourth valve port 2443 are blocked and further closed by the solid wall 45 of the valve plug 40. The inner port 2401 of the first valve port 241 communicates with the inner port 2401 of the second valve port 242 through the third partition cavity 423, and the inner port 2401 of the No. 1 fourth valve port 2441 communicates with the inner port 2401 of the No. 1 third valve port 2431 through the fourth partition cavity 424.

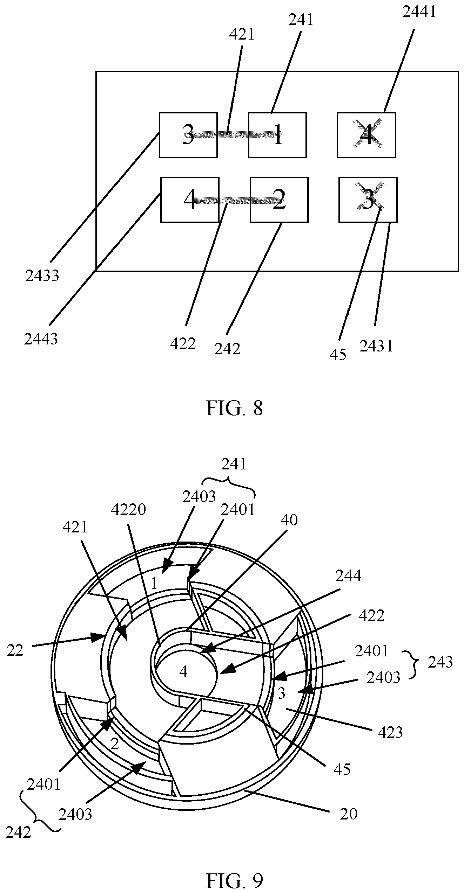

When the four-way valve is in the third mode, FIG. 8 is a diagram of a topology of the four-way valve in the third mode according to the first embodiment of this application. The inner port 2401 of the No. 1 fourth valve port 2441 and the inner port 2401 of the No. 1 third valve port 2431 are blocked and further closed by the solid wall 45 of the valve plug 40. The inner port 2401 of the first valve port 241 communicates with the inner port 2401 of the No. 2 third valve port 2433 through the first partition cavity 421, and the inner port 2401 of the No. 2 fourth valve port 2443 communicates with the inner port 2401 of the second valve port 242 through the second partition cavity 422.

The No. 2 third valve port 2433 that communicates with the No. 1 third valve port 2431 and the No. 2 fourth valve port 2443 that communicates with the No. 1 fourth valve port 2441 are added on the valve body 20. The valve plug 40 moves relative to the valve body 20. This can implement switching of the four-way valve between the three working modes, increase a flow path mode of the temperature control system 100, and improve control flexibility of the temperature control system 100. In addition, only the valve ports 24 need to be added to the valve body 20. In this way, a complex flow channel structure does not need to be disposed on the valve plug 40, thereby reducing production difficulty and manufacturing costs of the valve plug 40.

It may be understood that a structure of the valve plug 40, a quantity of partition cavities on the valve plug 40, and a disposition form are not limited in this application. When the four-way valve is in the first mode, the inner port 2401 of the No. 2 third valve port 2433 and the inner port 2401 of the No. 2 fourth valve port 2443 are blocked and further closed by the solid wall 45 of the valve plug 40. The inner port 2401 of the first valve port 241 communicates with the inner port 2401 of the No. 1 fourth valve port 2441 through at least one partition cavity, and the inner port 2401 of the second valve port 242 communicates with the inner port 2401 of the No. 1 third valve port 2431 through at least one partition cavity of the valve plug 40.

When the four-way valve is in the second mode, the inner port 2401 of the No. 2 third valve port 2433 and the inner port 2401 of the No. 2 fourth valve port 2443 are blocked and further closed by the solid wall 45 of the valve plug 40. The inner port 2401 of the first valve port 241 communicates with the inner port 2401 of the second valve port 242 through at least one partition cavity, and the inner port 2401 of the No. 1 fourth valve port 2441 communicates with the inner port 2401 of the No. 1 third valve port 2431 through at least one partition cavity.

When the four-way valve is in the third mode, with reference to FIG. 8, the inner port 2401 of the No. 1 fourth valve port 2441 and the inner port 2401 of the No. 1 third valve port 2431 are blocked and further closed by the solid wall 45 of the valve plug 40. The inner port 2401 of the first valve port 241 communicates with the inner port 2401 of the No. 2 third valve port 2433 through at least one partition cavity, and the inner port 2401 of the No. 2 fourth valve port 2443 communicates with the inner port 2401 of the second valve port 242 through at least one partition cavity.

According to the four-way valve provided in this application, the valve plug 40 rotates relative to the valve body 20. Any two of the first valve port 241, the second valve port 242, the third valve port 243, and the fourth valve port 244 can communicate with each other through at least one partition cavity of the valve plug 40, so that the four-way valve can be switched between the first mode, the second mode, and the third mode. Compared with that of a conventional four-way valve, a quantity of working modes of the four-way valve is increased. In this way, a quantity of three-way valves used in the temperature control system 100 is reduced. This helps reduce a volume occupied by the valve in the temperature control system 100, and helps increase a flow path mode and control flexibility of the temperature control system 100.

FIG. 9 is a three-dimensional sectional view of a part of a structure of a four-way valve according to a second embodiment of this application. The four-way valve includes a valve body 20 and a valve plug 40. The valve plug 40 may be accommodated in the valve body 20 in a rotating manner. The valve plug 40 may rotate around a rotation axis relative to the valve body 20. An outer wall of the valve body 20 includes an outer bottom wall and an outer circumferential wall that are connected. An inner wall of a mounting cavity includes an inner circumferential wall and an inner bottom wall that are connected. The inner bottom wall is perpendicular to an axial direction of the valve plug 40. The inner bottom wall and the outer bottom wall are arranged along the rotation axis. A first valve port 241, a second valve port 242, and a third valve port 243 may be non-linear holes. Outer ports of the first valve port 241, the second valve port 242, the third valve port 243, and a fourth valve port 244 are all disposed on the outer bottom wall of the valve body 20. This facilitates a connection between a fluid pipe and each valve port, thereby improving regularity of the pipe connection. Inner ports of the first valve port 241, the second valve port 242, the third valve port 243, and the fourth valve port 244 penetrate the inner wall of the mounting cavity. The inner ports of the first valve port 241, the second valve port 242, and the third valve port 243 are arranged in a circumferential direction of the valve body 20. The fourth valve port 244 is located on the rotation axis of the valve plug 40.

A first partition cavity 421 and a second partition cavity 422 are disposed on the valve plug 40. The first partition cavity 421 and the second partition cavity 422 are located on a circumferential wall of the valve plug 40 and separated by a solid wall 45. A part of the second partition cavity 422 is located on the rotation axis of the valve plug 40. The second partition cavity 422 penetrates the valve plug 40 and faces the inner bottom wall of the mounting cavity 22. The second partition cavity 422 is disposed in communication with the fourth valve port 244. An inner wall of the second partition cavity 422 includes an arc-shaped inner wall 4220, and a circle in which the arc-shaped inner wall 4220 is located is coaxially disposed with the fourth valve port 244, to lower a risk of leakage of the four-way valve. A joint between the inner wall of the second partition cavity 422 and an inner wall of the fourth valve port 244 is sealed to prevent fluid leakage. When the valve plug 40 rotates relative to the valve body 20, the second partition cavity 422 keeps in communication with the fourth valve port 244.

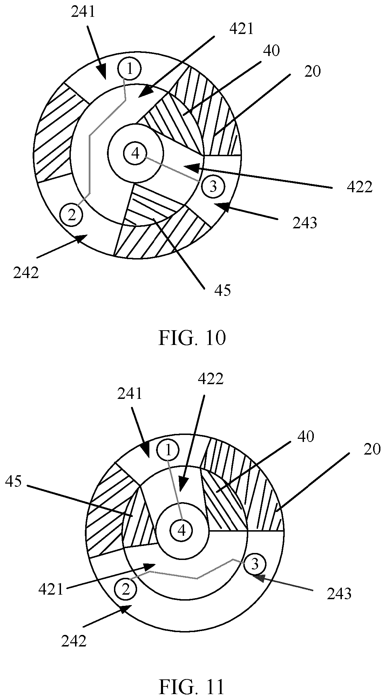

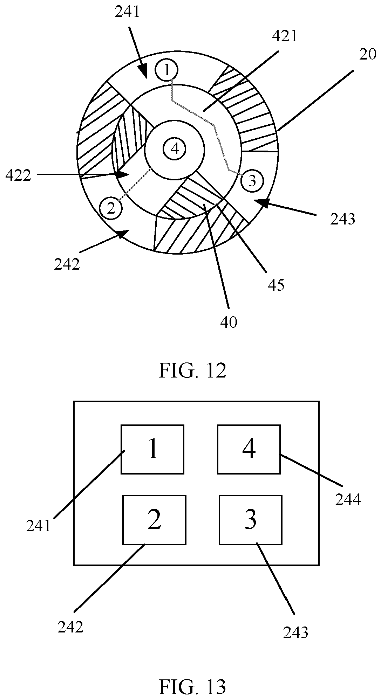

A working mode of the four-way valve includes a first mode, a second mode, and a third mode. The four-way valve switches between the first mode, the second mode, and the third mode through rotation of the valve plug 40 relative to the valve body 20. When the four-way valve is in the first mode, FIG. 10 is a cross-sectional diagram of the four-way valve in the first mode according to the second embodiment of this application. The first valve port 241 communicates with the second valve port 242 through the first partition cavity 421, and the third valve port 243 communicates with the second partition cavity 422. Because the second partition cavity 422 communicates with the fourth valve port 244, the third valve port 243 communicates with the fourth valve port 244. When the four-way valve is in the second mode, FIG. 11 is a cross-sectional diagram of the four-way valve in the second mode according to the second embodiment of this application. The first valve port 241 communicates with the second partition cavity 422. Because the second partition cavity 422 communicates with the fourth valve port 244, the first valve port 241 communicates with the fourth valve port 244. The second valve port 242 communicates with the third valve port 243 through the first partition cavity 421. When the four-way valve is in the third mode, FIG. 12 is a cross-sectional diagram of the four-way valve in the third mode according to the second embodiment of this application. The first valve port 241 communicates with the third valve port 243 through the first partition cavity 421, and the second valve port 242 communicates with the second partition cavity 422. Because the second partition cavity 422 communicates with the fourth valve port 244, the second valve port 242 communicates with the fourth valve port 244. The first valve port 241 communicates with the third valve port 243 through the first partition cavity 421.

The first valve port 241, the second valve port 242, the third valve port 243, and the fourth valve port 244 each include an inner port 2401 and an outer port 2403. The inner port 2401 of the fourth valve port 244 is disposed on the inner bottom wall. The second partition cavity 422 communicates with the fourth valve port 244. The part of the second partition cavity 422 and the fourth valve port 244 are arranged along the rotation axis of the valve plug 40. In this way, the four-way valve includes the three working modes. A flow channel on the valve plug 40 is simple to dispose and easy to manufacture.

It may be understood that, when the first valve port 241, the second valve port 242, and the third valve port 243 are linear holes, the outer ports of the first valve port 241, the second valve port 242, and the third valve port 243 may be disposed on the outer circumferential wall of the valve body 20, and the outer port of the fourth valve port 244 may be disposed on the outer bottom wall. The inner ports 2401 of the first valve port 241, the second valve port 242, and the third valve port 243 all penetrate the inner circumferential wall of the mounting cavity 22. The inner port 2401 of the fourth valve port 244 penetrates the inner bottom wall of the mounting cavity 22.

FIG. 13 is a diagram of an arrangement of four valve ports on a valve body according to a third embodiment of this application. There are four valve ports on a four-way valve. The valve body 20 includes a mounting cavity 22, a first valve port 241, a second valve port 242, a third valve port 243, and a fourth valve port 244. The first valve port 241, the second valve port 242, the third valve port 243, and the fourth valve port 244 all penetrate an inner side surface of the mounting cavity 22 and an outer side surface of the valve body 20, and are configured to circulate fluid. The first valve port 241, the second valve port 242, the third valve port 243, and the fourth valve port 244 are arranged in an array. The first valve port 241 and the fourth valve port 244 are arranged in a first row. The second valve port 242 and the third valve port 243 are arranged in a second row. The first valve port 241 and the second valve port 242 are arranged in a first column. The third valve port 243 and the fourth valve port 244 are arranged in a second column. The first valve port 241 and the third valve port 243 are arranged diagonally. The second valve port 242 and the fourth valve port 244 are arranged diagonally.

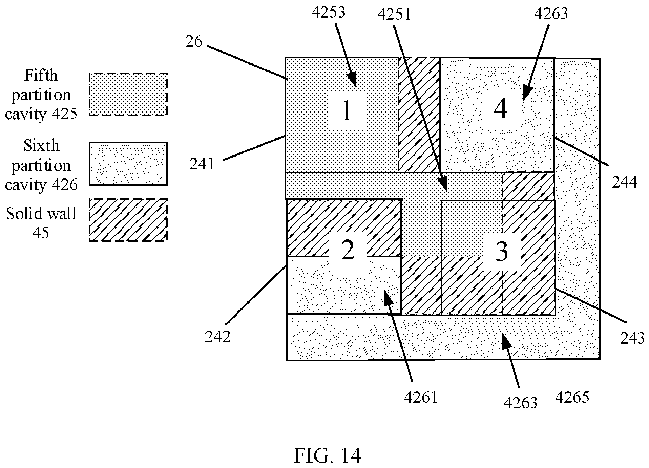

FIG. 14 is a diagram of cooperation between the valve body and the valve plug of the four-way valve in a third mode according to the third embodiment of this application. The valve plug 40 further includes a fifth partition cavity 425 and a sixth partition cavity 426. The fifth partition cavity 425 is configured to communicate with the first valve port 241 and the third valve port 243, and the sixth partition cavity 426 is configured to communicate with the second valve port 242 and the fourth valve port 244.

When the four-way valve is in the third mode, the third valve port 243, the first valve port 241, and the fifth partition cavity 425 communicate with one another, and the fourth valve port 244, the second valve port 242, and the sixth partition cavity 426 communicate with one another.

As shown in FIG. 14, a part of the second valve port 242 in FIG. 14 is blocked by a solid wall 45 of the valve plug 40, and a part of the second valve port 242 communicates with the fourth valve port 244 through the sixth partition cavity 426. For example, a half of the second valve port 242 is blocked by the solid wall 45 of the valve plug 40, and a half of the second valve port 242 communicates with the fourth valve port 244 through the sixth partition cavity 426. A part of the third valve port 243 is blocked by the solid wall 45 of the valve plug 40, and a part of the third valve port 243 communicates with the first valve port 241 through the fifth partition cavity 425.

A part of the fifth partition cavity 425 and a part of the sixth partition cavity 426 are arranged in an axial direction C of the valve plug 40, and a part of the fifth partition cavity 425 and a part of the sixth partition cavity 426 are arranged in a circumferential direction of the valve plug 40. The fifth partition cavity 425 includes a first part 4251 and a second part 4253 that communicates with each other.

A part of the fifth partition cavity 425 and a part of the sixth partition cavity 426 are arranged in an axial direction C of the valve plug 40, and a part of the fifth partition cavity 425 and a part of the sixth partition cavity 426 are arranged in a circumferential direction of the valve plug 40. The fifth partition cavity 425 includes a first part 4251 and a second part 4253 that communicates with each other. The first part 4251 and the second part 4253 are connected in the circumferential direction of the valve plug 40. The first part 4251 is configured to communicate with the first valve port 241, and the second part 4253 is configured to communicate with the third valve port 243.

The sixth partition cavity 426 includes a third part 4261, a fourth part 4263, and a fifth part 4265. The third part 4261 and the first part 4251 are arranged in the axial direction C of the valve plug 40, and the third part 4261 is configured to communicate with the second valve port 242. The fourth part 4263 is located between the third part 4261 and the fifth part 4265. The fourth part 4263 is approximately L-shaped. The first part 4251 and the fifth part 4265 are arranged in the circumferential direction of the valve plug 40. The fifth part 4265 is configured to communicate with the fourth valve port 244.

It may be understood that a structure of the fifth partition cavity 425 is not limited in this application, and a structure of the sixth partition cavity 426 is not limited in this application. For example, the fifth partition cavity 425 is approximately L-shaped, and the sixth partition cavity 426 is approximately L-shaped, provided that the fifth partition cavity 425 can enable communication between the first valve port 241 and the third valve port 243, and provided that the sixth partition cavity 426 can enable communication between the second valve port 242 and the fourth valve port 244.

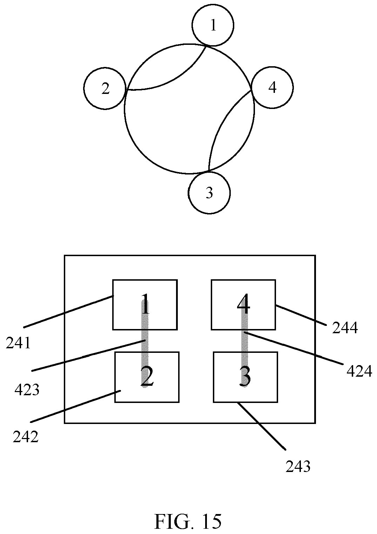

When the four-way valve is in a first mode, FIG. 15 is a diagram of a topology of the four-way valve in the first mode according to the third embodiment of this application. The first valve port 241, a No. 1 fourth valve port 2441, and the first partition cavity 421 communicate with one another, and the second valve port 242, the third valve port 243, and the second partition cavity 422 communicate with one another.

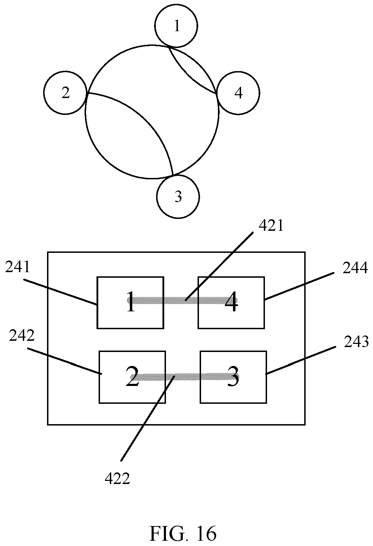

When the four-way valve is in a second mode, FIG. 16 is a diagram of a topology of the four-way valve in the second mode according to the third embodiment of this application. The first valve port 241, the second valve port 242, and the third partition cavity 423 communicate with one another, and the fourth valve port 244, the third valve port 243, and the fourth partition cavity 424 communicate with one another.

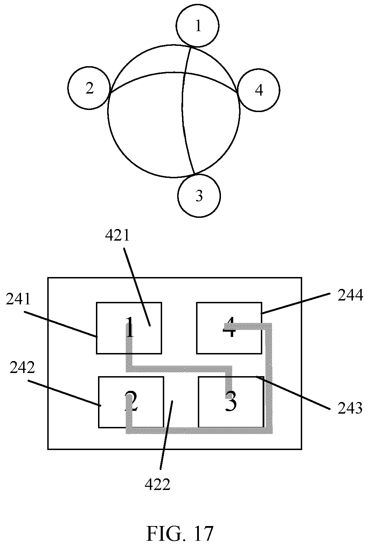

When the four-way valve is in the third mode, FIG. 17 is a diagram of a topology of the four-way valve in the third mode according to the third embodiment of this application. The third valve port 243, the first valve port 241, and the fifth partition cavity 425 communicate with one another, and the fourth valve port 244, the second valve port 242, and the sixth partition cavity 426 communicate with one another.

It may be understood that the first embodiment, the second embodiment, and the third embodiment of this application may be combined with each other if there is no conflict or contradiction.

It should be understood that expressions such as "include" and "may include" that may be used in this application represent existence of disclosed functions, operations, or constituent elements, and are not limited to one or more additional functions, operations, or constituent elements. In this application, terms such as "include" and/or "have" may be construed as indicating a particular feature, a quantity, an operation, a constituent element, a component, or a combination thereof, but shall not be construed as excluding existence or possible addition of one or more other features, quantities, operations, constituent elements, components, or combinations thereof.

In addition, in this application, the expression "and/or" includes any and all combinations of words listed in association. For example, the expression "A and/or B" may include A, may include B, or may include both A and B.

In this application, expressions including ordinal numbers such as "first" and "second" may modify elements. However, such elements are not limited by the expressions. For example, the expressions do not limit an order and/or importance of the elements. The expressions are used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component is referred to as "being connected to" or "accessing" another component, it should be understood that the component may be directly connected to or access the another component, or there may be another component between the component and the another component. In addition, when a component is referred to as "being directly connected to" or "directly accessing" another component, it should be understood that there is no component between the component and the another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A four-way valve, used in a temperature control system, wherein the four-way valve comprises a valve body and a valve plug; the valve body comprises a mounting cavity, a first valve port, a second valve port, a third valve port, and a fourth valve port; the first valve port, the second valve port, the third valve port, and the fourth valve port all penetrate an inner side surface of the mounting cavity and an outer side surface of the valve body, and are configured to circulate fluid; and the valve plug is accommodated in the mounting cavity and is rotatable relative to the valve body, and a circumferential side of the valve plug comprises a plurality of partition cavities;
a working mode of the four-way valve comprises a first mode, a second mode, and a third mode, and the four-way valve switches between the first mode, the second mode, and the third mode through rotation of the valve plug relative to the valve body; and
when the four-way valve is in the first mode, the first valve port communicates with the second valve port through at least one of the partition cavities, and the third valve port communicates with the fourth valve port through at least one of the partition cavities;
when the four-way valve is in the second mode, the first valve port communicates with the fourth valve port through at least one of the partition cavities, and the second valve port communicates with the third valve port through at least one of the partition cavities; or
when the four-way valve is in the third mode, the first valve port communicates with the third valve port through at least one of the partition cavities, and the second valve port communicates with the fourth valve port through at least one of the partition cavities.

2. The four-way valve according to claim 1, wherein the third valve port comprises a No. 1 third valve port and a No. 2 third valve port; the fourth valve port comprises a No. 1 fourth valve port and a No. 2 fourth valve port; and the No. 1 third valve port communicates with the No. 2 third valve port, and the No. 1 fourth valve port communicates with the No. 2 fourth valve port;
the first valve port, the second valve port, the No. 1 third valve port, the No. 2 third valve port, the No. 1 fourth valve port, and the No. 2 fourth valve port each comprise an inner port disposed toward the mounting cavity; and
when the four-way valve is in the first mode, the inner port of the No. 2 third valve port and the inner port of the No. 2 fourth valve port are closed by the valve plug, the inner port of the first valve port communicates with the inner port of the No. 1 fourth valve port through the at least one of the partition cavities, and the inner port of the second valve port communicates with the inner port of the No. 1 third valve port through the at least one of the partition cavities;
when the four-way valve is in the second mode, the inner port of the No. 2 third valve port and the inner port of the No. 2 fourth valve port are closed by the valve plug, the inner port of the first valve port communicates with the inner port of the second valve port through the at least one of the partition cavities, and the inner port of the No. 1 fourth valve port communicates with the inner port of the No. 1 third valve port through the at least one of the partition cavities; or
when the four-way valve is in the third mode, the inner port of the No. 1 fourth valve port and the inner port of the No. 1 third valve port are closed by the valve plug, the inner port of the first valve port communicates with the inner port of the No. 2 third valve port through the at least one of the partition cavities, and the inner port of the No. 2 fourth valve port communicates with the inner port of the second valve port through the at least one of the partition cavities.

3. The four-way valve according to claim 2, wherein the first valve port, the second valve port, the No. 1 third valve port, the No. 2 third valve port, the No. 1 fourth valve port, and the No. 2 fourth valve port are arranged in an array; the No. 2 third valve port, the first valve port, and the No. 1 fourth valve port are sequentially arranged in a first row; and the No. 2 fourth valve port, the second valve port, and the No. 2 third valve port are sequentially arranged in a second row.

4. The four-way valve according to claim 3, wherein the plurality of partition cavities comprise a first partition cavity, a second partition cavity, a third partition cavity, and a fourth partition cavity; the first partition cavity and the second partition cavity are arranged in an axial direction of the valve plug; and the first partition cavity, the third partition cavity, and the fourth partition cavity are arranged in a circumferential direction of the valve plug; and
when the four-way valve is in the first mode, the inner port of the first valve port, the No. 1 fourth valve port, and the first partition cavity communicate with one another, and the second valve port, the No. 2 third valve port, and the second partition cavity communicate with one another;
when the four-way valve is in the second mode, the first valve port, the second valve port, and the third partition cavity communicate with one another, and the No. 1 fourth valve port, the No. 1 third valve port, and the fourth partition cavity communicate with one another; or
when the four-way valve is in the third mode, the No. 2 third valve port, the first valve port, and the first partition cavity communicate with one another, and the No. 2 fourth valve port, the second valve port, and the second partition cavity communicate with one another.

5. The four-way valve according to claim 2, wherein the No. 1 third valve port, the No. 2 third valve port, the No. 1 fourth valve port, and the No. 2 fourth valve port each comprise an outer port disposed away from the mounting cavity; the outer port of the No. 1 third valve port and the outer port of the No. 2 third valve port are configured to connect to and communicate with a same fluid pipe; and the outer port of the No. 1 fourth valve port and the outer port of the No. 2 fourth valve port are configured to connect to and communicate with a same fluid pipe.

6. The four-way valve according to claim 1, wherein an inner wall of the mounting cavity comprises an inner circumferential wall and an inner bottom wall that are connected; the inner bottom wall is perpendicular to an axial direction of the valve plug; the first valve port, the second valve port, the third valve port, and the fourth valve port each comprise an outer port and an inner port; the inner port of the first valve port, the inner port of the second valve port, and the inner port of the third valve port are all disposed on the inner circumferential wall; the inner port of the fourth valve port is disposed on the inner bottom wall; and the outer ports are all arranged on an outer wall of the valve body;
the plurality of partition cavities comprise a first partition cavity and a second partition cavity; the first partition cavity and the second partition cavity are arranged in a circumferential direction of the valve plug; the second partition cavity penetrates the valve plug and faces a bottom wall of the inner bottom wall; the second partition cavity communicates with the fourth valve port; and a part of the second partition cavity and the fourth valve port are arranged along a rotation axis of the valve plug rotating around the valve body; and
when the four-way valve is in the first mode, the first valve port, the second valve port, and the first partition cavity communicate with one another, and the fourth valve port, the third valve port, and the second partition cavity communicate with one another;
when the four-way valve is in the second mode, the first valve port, the fourth valve port, and the second partition cavity communicate with one another, and the second valve port, the third valve port, and the first partition cavity communicate with one another; or
when the four-way valve is in the third mode, the third valve port, the first valve port, and the first partition cavity communicate with one another, and the second valve port, the fourth valve port, and the second partition cavity communicate with one another.

7. The four-way valve according to claim 6, wherein the outer wall of the valve body comprises an outer bottom wall and an outer circumferential wall that are connected, the outer bottom wall and the inner bottom wall are disposed back to back, and the outer port is disposed on the outer bottom wall.

8. The four-way valve according to claim 6, wherein an inner wall of the second partition cavity comprises an arc-shaped inner wall, and a circle in which the arc-shaped inner wall is located is coaxially disposed with the fourth valve port.

9. The four-way valve according to any one of claims 1 to 8, wherein the outer side surface that is of the valve body and that is away from the mounting cavity comprises a plane, and the first valve port, the second valve port, the third valve port, and the fourth valve port all penetrate the plane.

10. A temperature control system, wherein the temperature control system comprises a heat exchanger, a plurality of fluid pipes, and the four-way valve according to any one of claims 1 to 9, each of the first valve port, the second valve port, the third valve port, and the fourth valve port of the four-way valve is connected to one of the fluid pipes, and at least one of the plurality of fluid pipes is provided with the heat exchanger.

11. An energy storage system, wherein the energy storage system comprises a battery pack and the temperature control system according to claim 10, and the temperature control system is configured to control a temperature of the battery pack.
